(19) Europäisches Patentamt
European Patent Office
Office européen des brevets

(11) **EP 4 656 409 A1**

(12) **EUROPEAN PATENT APPLICATION**

(43) Date of publication:
**03.12.2025 Bulletin 2025/49**

(21) Application number: 25170998.6

(22) Date of filing: **16.04.2025**

(51) International Patent Classification (IPC):
*B60C 1/00* (2006.01)    *C08L 7/00* (2006.01)

(52) Cooperative Patent Classification (CPC):
(C-Sets available)
**C08L 7/00; B60C 1/0016; B60C 11/005;**
B60C 2011/0016; B60C 2011/0025    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.05.2024 JP 2024086381**

(71) Applicant: **Toyo Tire Corporation**
**Itami-shi, Hyogo 664-0847 (JP)**

(72) Inventor: **KIMURA, Takuya**
**Itami-shi, Hyogo, 664-0847 (JP)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(54) **TIRE**

(57) In a tire having a tread rubber including a cap tread and a base tread disposed inward thereof, the base tread is formed from a rubber composition including a rubber component that contains 70 mass% or more of natural rubber and 35 to 60 parts by mass of a filler per 100 parts by mass of the rubber component, and having a loss factor tan δ of 0.045 or less as measured under conditions of a temperature of 60°C, a static strain of 10%, a dynamic strain of 1%, and a frequency of 10 Hz. In addition, the average peel strength when a rubber composition forming the cap tread and the rubber composition forming the base tread attached together are separated at a speed of 50 mm/min is 300 N/mm or more.

EP 4 656 409 A1

(52) Cooperative Patent Classification (CPC): (Cont.)

C-Sets
**C08L 7/00, C08L 9/00, C08K 3/04, C08K 3/04,
C08K 3/36, C08K 3/06**

# EP 4 656 409 A1

**Description**

BACKGROUND OF THE INVENTION

1. Field of the Invention

The present invention relates to a tire, and more specifically relates to a tire having a tread rubber including a cap tread and a base tread.

2. Description of Related Art

With the increasing demand for more fuel-efficient automobiles, rubber compositions having excellent low heat generation properties are also desired for tire treads. Generally, the tread of a tire is composed of a cap tread that comes into contact with the road surface and a base tread that is disposed on the inner peripheral side thereof. In order to improve the low heat generation properties of a tire, it is known to use a rubber composition having excellent low heat generation properties for the base tread.

Tires also need to be strong enough to withstand driving. However, when a filler, which is a reinforcing material, is incorporated into a rubber composition in an increased amount, although the strength improves, the low heat generation properties tend to deteriorate.

JP2018-058420A discloses, as a rubber composition for a base tread having excellent fracture resistance and fuel economy, a rubber composition whose dynamic elastic modulus, loss tangent, breaking strength, and elongation at break satisfy a predetermined general formula.

JP2022-148076A discloses that predetermined carbon black, silica, and a silane coupling agent are incorporated into a rubber composition for a base tread, also the hardness of the rubber composition for a base tread and the hardness and storage modulus of a rubber composition for a cap tread are specified, and further the base tread thicknesses and the cap tread thicknesses are specified, thereby simultaneously achieving durability and low heat generation properties.

Meanwhile, JPH10-129214A discloses that in a tread for an off-road tire, predetermined amounts of carbon black and short fibers are incorporated, and also the orientation direction of the short fibers is specified, thereby improving grip performance and mechanical strength.

SUMMARY OF THE INVENTION

As described above, the tread of a tire is required to have improved low heat generation properties together with improved strength. For example, strength requirements are particularly high for off-road tires, and it has been found that in conventional tires using a rubber composition having excellent low heat generation properties for the base tread, in some cases, separation occurs near the interface between the cap tread and the base tread, particularly in the base tread portion, during driving tests in harsh areas. Therefore, tread rubbers are required to have improved low heat generation properties while suppressing separation.

In light of the above points, an object of an embodiment of the invention is to provide a tire capable of improving low heat generation properties while maintaining tread separation resistance.

In the course of extensive research in view of the above problems, the present inventors have found that when the loss factor tan δ of the rubber composition forming a base tread is set to 0.045 or less, and the average peel strength in a state where the rubber composition forming a cap tread and the rubber composition forming a base tread are attached together is set to 300 N/mm or more, separation starting at the base tread portion in a tire can be suppressed, and the above problems can be solved.

The invention includes the following embodiments.

[1] A tire having a tread rubber including a cap tread and a base tread that is disposed inward of the cap tread in a tire radial direction, in which

the base tread is formed from a rubber composition including a rubber component that contains 70 mass% or more of natural rubber and 35 to 60 parts by mass of a filler per 100 parts by mass of the rubber component, and having a loss factor tan δ of 0.045 or less as measured under conditions of a temperature of 60°C, a static strain of 10%, a dynamic strain of 1%, and a frequency of 10 Hz, and
an average peel strength when a rubber composition forming the cap tread and the rubber composition forming the base tread attached together are separated at a speed of 50 mm/min is 300 N/mm or more.

[2] The tire according to [1], in which the rubber composition forming the base tread has a 300% modulus of 12 to 20 MPa as measured in accordance with JIS K6251:2017.

[3] The tire according to [1] or [2], in which the rubber composition forming the base tread has a crescent tear strength of 32 N/mm or more as measured in accordance with JIS K6252-1:2015.

[4] The tire according to any one of [1] to [3], in which the filler in the rubber composition forming the base tread contains carbon black having a nitrogen adsorption specific surface area of 60 $m^2$/g or less.

[5] The tire according to any one of [1] to [4], in which the filler in the rubber composition forming the base tread contains two or more kinds of carbon black.

[6] The tire according to any one of [1] to [5], in which the filler in the rubber composition forming the base tread contains silica.

[7] The tire according to any one of [1] to [6], being an off-road tire.

According to an embodiment of the invention, it is possible to improve low heat generation properties while maintaining tread separation resistance.

BRIEF DESCRIPTION OF THE DRAWINGS

FIG. 1 is a half cross-sectional view of a tire showing one embodiment; and
FIG. 2 is a cross-sectional view of a test piece used in the measurement of average peel strength.

DESCRIPTION OF EMBODIMENTS

A tire according to this embodiment has a tread rubber including a cap tread and a base tread disposed inward of the cap tread in the tire radial direction.

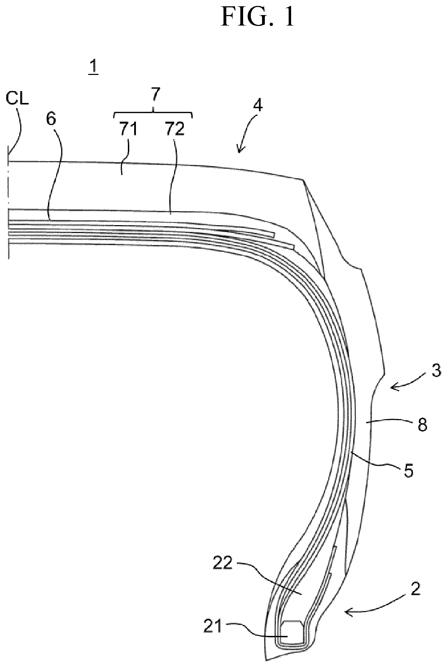

FIG. 1 is a half cross-sectional view of a pneumatic tire 1 showing one example. In FIG. 1, CL represents the tire equator. The tire 1 has a meridian cross-sectional shape that is symmetrical with respect to the tire equator CL and extends in the tire circumferential direction, forming an annular shape.

The pneumatic tire 1 includes a pair of bead parts 2 to be mounted on a rim, a pair of sidewalls 3 that extend outward from the respective bead parts 2 in the tire radial direction, and a tread 4 that connects between the pair of sidewalls 3. In each bead part 2, an annular bead core 21 and a rubber bead filler 22 provided radially outward thereof are embedded. Between the pair of left and right bead cores 21, one or more carcass plies 5 (two in the example of FIG. 1) each containing organic fiber cords arranged in the radial direction are toroidally located. Each end of the carcass ply 5 is anchored to the bead core 21.

On the outer periphery of the carcass ply 5 in the tread 4, a belt 6 composed of a plurality of crossed belt plies (two in the example of FIG. 1) each containing steel cords is provided. On the outer periphery of the belt 6, a tread rubber 7 that comes into contact with the road surface is provided. In addition, on the outer side of the carcass ply 5 in the sidewall 3, a sidewall rubber 8 is provided.

The tread rubber 7 has a two-layer structure including a cap tread 71 on the tire tread side that comes into contact with the road surface and a base tread 72 that is disposed inward of the cap tread 71 in the tire radial direction, which is a so-called cap/base structure. Incidentally, the surface of the tread 4 is provided with grooves (not shown), forming a tread pattern having lands such as blocks and ribs.

The cap tread 71 and the base tread 72 are each formed from a rubber composition including a diene rubber as a rubber component. Here, the rubber composition forming the cap tread 71 is referred to as "rubber composition A", and the rubber composition forming the base tread 72 is referred to as "rubber composition B".

In the rubber composition B, the rubber component contains 70 mass% or more of natural rubber (NR). That is, 100 mass% of the rubber component contains 70 to 100 mass% of natural rubber, and may also be natural rubber alone. The proportion of natural rubber is preferably 75 mass% or more, and more preferably 80 mass% or more. The rubber component may also contain other diene rubbers in addition to natural rubber. As other diene rubbers, for example, isoprene rubber (polyisoprene) (IR), butadiene rubber (polybutadiene) (BR), styrene butadiene rubber (SBR), butadiene-isoprene copolymer rubbers, styrene-butadiene-isoprene copolymer rubbers, and the like can be mentioned.

Here, a diene rubber refers to a rubber with a repeating unit corresponding to a diene monomer having a conjugated double bond. The concept of diene rubbers also encompasses those modified at the end or backbone as necessary (e.g., end-modified BR and end-modified SBR).

In one embodiment, it is preferable that the rubber component in the rubber composition B contains 70 to 100 mass% of natural rubber and 0 to 30 mass% of butadiene rubber. It is more preferable that the rubber component contains 75 to 100 mass% of natural rubber and 0 to 25 mass% of butadiene rubber, and it is still more preferable that the rubber component contains 80 to 100 mass% of natural rubber and 0 to 20 mass% of butadiene rubber. In this case, the rubber component may be natural rubber alone, that is, may contain 100 mass% of natural rubber and 0 mass% of butadiene rubber.

The butadiene rubber is not particularly limited, and may be a modified butadiene rubber that has been modified at the end and/or backbone, or may also be an unmodified butadiene rubber without modification. As the modified butadiene rubber, BR that has a functional group introduced into the end and/or backbone thereof and thus has been modified with the functional group is used. The functional group preferably contains an oxygen atom and/or a nitrogen atom and may be, for example, at least one selected from the group consisting of an amino group, a hydroxy group, an alkoxy group, an epoxy group, and a carboxy group.

The butadiene rubber may also be a high-cis butadiene rubber (high-cis BR) having a cis-1,4 bond content of 90 mass% or more (more preferably 95 mass% or more). Examples of high-cis BR include butadiene rubbers polymerized using a cobalt catalyst or a neodymium catalyst. Here, the cis-1,4 bond content is a value calculated from the integral ratio of the $^1$H-NMR spectrum.

The rubber composition B contains 35 to 60 parts by mass of a filler per 100 parts by mass of the rubber component. When the amount of the filler is 35 parts by mass or more, the strength of the base tread is more likely to be maintained, maintaining the tread separation resistance. When the amount of the filler is 60 parts by mass or less, the low heat generation properties are more likely to improve. The amount of the filler in the rubber composition B is preferably 40 to 55 parts by mass, and more preferably 42 to 52 parts by mass, per 100 parts by mass of the rubber component.

As the filler, carbon black and/or silica, which is a reinforcing filler, is preferably used. In the rubber composition B, from the viewpoint of low heat generation properties, the filler preferably contains carbon black having a nitrogen adsorption specific surface area ($N_2SA$) of 60 $m^2/g$ or less (hereinafter referred to as carbon black (X)). The $N_2SA$ of the carbon black (X) is preferably 20 to 60 $m^2/g$, more preferably 20 to 50 $m^2/g$, and still more preferably 25 to 45 $m^2/g$.

As used herein, the nitrogen adsorption specific surface area ($N_2SA$) of carbon black is measured in accordance with JIS K6217-2:2017, Method A.

In the rubber composition B, the carbon black (X) content is not particularly limited, but is preferably 10 to 45 parts by mass, more preferably 15 to 40 parts by mass, and still more preferably 20 to 30 parts by mass, per 100 parts by mass of the rubber component.

In the rubber composition B, the filler preferably contains two or more kinds of carbon black. As the two or more kinds of carbon black, for example, it is possible to use two or more kinds of carbon black (X) having an $N_2SA$ of 60 $m^2/g$ or less or two or more kinds of carbon black having an $N_2SA$ of more than 60 $m^2/g$ (hereinafter referred to as carbon black (Y)), and it is also possible to use the carbon black (X) and the carbon black (Y) together. As a result of using two or more kinds of carbon black having different $N_2SAs$ together in this manner, low heat generation properties and strength are more likely to be simultaneously achieved.

The $N_2SA$ of the carbon black (Y) is not particularly limited, but is preferably more than 60 $m^2/g$ and 100 $m^2/g$ or less, more preferably 65 to 100 $m^2/g$, and still more preferably 70 to 95 $m^2/g$.

In the rubber composition B, the filler preferably contains silica. The silica is preferably wet silica such as wet-precipitated silica or wet-gelled silica. The nitrogen adsorption specific surface area (BET) of the silica is not particularly limited and may be, for example, 100 to 300 $m^2/g$, 150 to 250 $m^2/g$, or 180 to 220 $m^2/g$.

As used herein, the nitrogen adsorption specific surface area of silica is a BET specific surface area measured in accordance with the BET method described in JIS K6430:2008.

In the rubber composition B, the silica content is not particularly limited, but is preferably 1 to 30 parts by mass, more preferably 2 to 25 parts by mass, and still more preferably 3 to 20 parts by mass, per 100 parts by mass of the rubber component.

In one embodiment, the filler in the rubber composition B may contain, per 100 parts by mass of the rubber component, 10 to 45 parts by mass of carbon black (X) and 2 to 35 parts by mass of carbon black (Y) and/or silica, 15 to 40 parts by mass of carbon black (X) and 10 to 30 parts by mass of carbon black (Y) and/or silica, or 20 to 30 parts by mass of carbon black (X) and 15 to 25 parts by mass of carbon black (Y) and/or silica.

In addition to the above components, the rubber composition B can also incorporate various additives generally used in rubber compositions, such as silane coupling agents, waxes, antioxidants, zinc oxide, stearic acid, oils, vulcanizing agents, and vulcanization accelerators.

A silane coupling agent is preferably used in the case where silica is used as a filler. As silane coupling agents, for example, sulfide-based silane coupling agents such as bis(3-triethoxysilylpropyl) tetrasulfide, bis(2-triethoxysilylethyl) tetrasulfide, bis(4-triethoxysilylbutyl) tetrasulfide, bis(3-trimethoxysilylpropyl) tetrasulfide, bis(2-trimethoxysilylethyl) tetrasulfide, bis(2-triethoxysilylethyl) trisulfide, bis(4-trimethoxysilylbutyl) trisulfide, bis(3-triethoxysilylpropyl) disulfide, bis(2-triethoxysilylethyl) disulfide, bis(4-triethoxysilylbutyl) disulfide, bis(3-trimethoxysilylpropyl) disulfide, bis(2-trimethoxysilylethyl) disulfide, bis(4-trimethoxysilylbutyl) disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide, mercapto-based silane coupling agents such as 3-mercaptopropyltrimethoxysilane, 2-mercaptoethyltriethoxysilane, and 3-octanoylthio-1-propyltriethoxysilane, and the like can be mentioned. Any one of them may be used alone, and it is also possible to use two or more kinds together. The amount of the silane coupling agent is not particularly limited and may be, for example, 2 to 20 parts by mass, or 5 to 15 parts by mass, per 100 parts by mass of silica.

The wax content is not particularly limited and may be, for example, 0 to 10 parts by mass, 0.5 to 5 parts by mass, or 1 to 4 parts by mass, per 100 parts by mass of the rubber component.

As antioxidants, for example, amine-ketone-based, aromatic secondary amine-based, monophenol-based, bisphenol-based, benzimidazole-based, and like various antioxidants can be mentioned. Any one of them can be used alone, and it is also possible to use a combination of two or more kinds. The antioxidant content is not particularly limited and may be, for example, 0 to 10 parts by mass, 0.5 to 5 parts by mass, or 1 to 4 parts by mass, per 100 parts by mass of the rubber component.

The zinc oxide content is not particularly limited and may be, for example, 0 to 10 parts by mass, 0.5 to 7 parts by mass, or 1 to 5 parts by mass, per 100 parts by mass of the rubber component.

The stearic acid content is not particularly limited and may be, for example, 0 to 10 parts by mass, 0.5 to 5 parts by mass, or 1 to 4 parts by mass, per 100 parts by mass of the rubber component.

Sulfur is preferable as a vulcanizing agent, and, for example, powdered sulfur, precipitated sulfur, colloidal sulfur, insoluble sulfur, highly dispersed sulfur, and the like can be mentioned. The sulfur content is not particularly limited and may be 0.1 to 5 parts by mass, 0.5 to 4 parts by mass, or 1 to 3 parts by mass, per 100 parts by mass of the rubber component.

As vulcanization accelerators, for example, sulfenamide-based, guanidine-based, thiuram-based, thiazole-based, and like various vulcanization accelerators can be mentioned. Any one of them can be used alone, and it is also possible to use a combination of two or more kinds. The vulcanization accelerator content is not particularly limited and may be 0.1 to 5 parts by mass, 0.5 to 4 parts by mass, or 1 to 3 parts by mass, per 100 parts by mass of the rubber component.

In this embodiment, the formulation of the rubber composition A forming the cap tread 71 is not particularly limited, and a rubber composition that is usually used for the cap tread of a pneumatic tire can be applied. For example, the rubber composition A may include a rubber component containing a diene rubber, as well as carbon black and/or silica.

In the rubber composition A, the diene rubber as a rubber component is not particularly limited. In one embodiment, the rubber component preferably contains at least one selected from the group consisting of natural rubber (NR), styrene butadiene rubber (SBR), and butadiene rubber (BR), and more preferably contains natural rubber and styrene butadiene rubber. The rubber component in the rubber composition A may contain, for example, 30 to 90 parts by mass of natural rubber and 10 to 70 parts by mass of styrene butadiene rubber, 50 to 80 parts by mass of natural rubber and 20 to 50 parts by mass of styrene butadiene rubber, or 60 to 75 parts by mass of natural rubber and 25 to 40 parts by mass of styrene butadiene rubber.

In the rubber composition A, it is preferable to use the carbon black (Y) as carbon black. In addition, as silica, one having a nitrogen adsorption specific surface area (BET) of 100 to 300 $m^2$/g is preferable, for example, more preferably 150 to 250 $m^2$/g, and still more preferably 180 to 220 $m^2$/g. In the rubber composition A, it is preferable to use the carbon black (Y) and silica together as a filler. The amount of carbon black and/or silica is not particularly limited and may be, for example, 30 to 100 parts by mass, or 40 to 80 parts by mass, per 100 parts by mass of the rubber component.

In addition to the above components, the rubber composition A can also incorporate various additives generally used in rubber compositions, such as silane coupling agents, waxes, antioxidants, zinc oxide, stearic acid, oils, vulcanizing agents, and vulcanization accelerators. The details and contents of these additives are as described above for the rubber composition B.

The rubber compositions A and B can be made by kneading in the usual manner using a commonly used mixing machine such as a Banbury mixer, a kneader, or a roll. That is, for example, in the first mixing stage, additives excluding a vulcanizing agent and a vulcanization accelerator are added to a rubber component and mixed, and then, in the final mixing stage, a vulcanizing agent and a vulcanization accelerator are added to the obtained mixture and mixed, whereby a rubber composition can be prepared.

In this embodiment, the rubber composition B forming a base tread has a loss factor tan δ of 0.045 or less as measured under conditions of a temperature of 60°C, a static strain of 10%, a dynamic strain of 1%, and a frequency of 10 Hz. When the loss factor is 0.045 or less, the low heat generation properties can be improved. The lower the loss factor, the less likely heat is to be generated, leading to better low heat generation properties, so the lower limit is not particularly set, but is usually 0.025 or more. The loss factor of the rubber composition B is more preferably 0.025 to 0.044, and still more preferably 0.025 to 0.043.

The loss factor tan δ of the rubber composition B is a loss tangent in a tensile mode measured from a vulcanized rubber sample under conditions of a temperature of 60°C, a static strain of 10%, a dynamic strain of 1%, and a frequency of 10 Hz in accordance with JIS K6394:2007.

The rubber composition B preferably has a 300% modulus (M300) of 12 to 20 MPa as measured in accordance with JIS K6251:2017. When the 300% modulus is 12 MPa or more, stress concentration upon deformation under applied force can be reduced. Therefore, the average peel strength is more likely to be improved, and the tread separation resistance is more likely to be improved. The 300% modulus of the rubber composition B is preferably 14 to 20 MPa, and more preferably 16 to 20 MPa.

The 300% modulus of the rubber composition B is a tensile stress at 300% elongation measured from a vulcanized rubber sample at a temperature of 23°C in accordance with JIS K6251:2017.

The rubber composition B preferably has a crescent tear strength of 32 N/mm or more, more preferably 40 N/mm or more, as measured in accordance with JIS K6252-1:2015. When the tear strength is 32 N/mm or more, more preferably 40 N/mm or more, this leads to improved cut resistance, and the average peel strength is more likely to be improved, and the tread separation resistance is more likely to be improved. The higher the tear strength, the more preferable it is, so the upper limit is not particularly set, but is usually 100 N/mm or less.

The tear strength of the rubber composition B is the maximum force required to tear a crescent-shaped test piece divided by the test piece thickness, which is measured from a vulcanized rubber sample at a temperature of 23°C in accordance with JIS K6252-1:2015.

In this embodiment, the average peel strength when the rubber composition A and the rubber composition B attached together are separated at a speed of 50 mm/min is 300 N/mm or more. When the average peel strength is 300 N/mm or more, the tread separation resistance can be improved. The higher the average peel strength, the better the resulting tread separation resistance, so the upper limit is not particularly set, but is usually 600 N/mm or less. The average peel strength is preferably 320 to 600 N/mm, and more preferably 350 to 550 N/mm. Here, the average peel strength is the average of peel strength per 1 mm width of a test piece which is obtained by attaching rubber composition B to rubber composition A and vulcanizing the rubber compositions, and the measurement method is as described in the section of Examples.

As described above, the separation of a tread rubber occurs starting from the base tread portion. Therefore, in order to increase the average peel strength, for example, in the rubber composition B, it is possible to increase the proportion of natural rubber, incorporate the carbon black (Y) and/or silica and increase the amount of incorporation, or increase the total filler amount.

The method for producing a tire according to this embodiment is not particularly limited. For example, in the usual manner, the rubber compositions A and B are each formed into a predetermined shape by extrusion to give an unvulcanized tread rubber member formed of a cap tread rubber member and a base tread rubber member laminated together. The tread rubber member is combined with other tire members to make an unvulcanized tire (green tire). Subsequently, vulcanization molding is performed at 140°C to 180°C, for example, whereby a tire can be produced.

The kind of tire according to this embodiment is not particularly limited, and, for example, pneumatic tires of various sizes for various applications, including tires for passenger cars, large tires for trucks and buses, etc., can be mentioned. The tire is preferably an off-road tire suitable for driving on uneven surfaces such as sandy and rocky areas, and more preferably an off-road pneumatic radial tire having blocks as the tread pattern.

Examples

Hereinafter, Examples of the invention will be shown, but the invention is not limited to these Examples.

[Preparation of Rubber Composition B]

Using a Banbury mixer, following the formulations (parts by mass) shown in Tables 1 and 2 below, first, in the first mixing stage, ingredients excluding sulfur and a vulcanization accelerator were added to a rubber component and kneaded (discharge temperature = 155°C). Next, in the final mixing stage, sulfur and a vulcanization accelerator were added to the obtained kneaded product and kneaded (discharge temperature = 90°C), thereby preparing a rubber composition B for a base tread. The details of each component in Tables 1 and 2 are as follows.

- Natural rubber: RSS #3
- Butadiene rubber 1: High-cis BR polymerized using a Co catalyst (cis-1,4 bond content: 97 mass%), "UBEPOL BR150B" manufactured by UBE Corporation
- Butadiene rubber 2: High-cis BR polymerized using a Nd catalyst (cis-1,4 bond content: 95 mass%), "BR730" manufactured by ENEOS Materials Corporation
- Butadiene rubber 3: End-modified BR, "Nipol BR1250H" manufactured by Zeon Corporation
- Carbon black 1: $N_2SA$ = 27 $m^2/g$, "SEAST V" manufactured by Tokai Carbon Co., Ltd.
- Carbon black 2: $N_2SA$ = 42 $m^2/g$, "SEAST SO" manufactured by Tokai Carbon Co., Ltd.
- Carbon black 3: $N_2SA$ = 84 $m^2/g$, "SEAST 300" manufactured by Tokai Carbon Co., Ltd.
- Carbon black 4: $N_2SA$ = 93 $m^2/g$, "SEAST KH" manufactured by Tokai Carbon Co., Ltd.
- Silica: "Nipsil AQ" manufactured by Tosoh Silica Corporation (nitrogen adsorption specific surface area: 205 $m^2/g$)

- Silane coupling agent: Sulfide-based, "Si75" manufactured by Evonik Japan Co., Ltd.
- Wax: "OZOACE 1722" manufactured by Nippon Seiro Co., Ltd.
- Antioxidant 1: "Nocrac 6C" manufactured by Ouchi Shinko Chemical Industrial Co., Ltd.
- Antioxidant 2: "ANTIOXIDANT TMQ" manufactured by Kemai Chemical Co., Ltd.
- Zinc oxide: "Zinc Oxide, Type 3" manufactured by Mitsui Mining & Smelting Co., Ltd.
- Stearic acid: "LUNAC S20" manufactured by Kao Corporation
- Sulfur: "5% Oil-Treated Powdered Sulfur" manufactured by Tsurumi Chemical Industry Co., Ltd.
- Vulcanization accelerator: TBBS, "Sanceler NS-G" manufactured by Sanshin Chemical Industry Co., Ltd.

[Table 1]

|  | Ex. 1 | Ex. 2 | Ex. 3 | Ex. 4 | Ex. 5 | Ex. 6 | Ex. 7 | Ex. 8 |
|---|---|---|---|---|---|---|---|---|
| Formulation (parts by mass) |  |  |  |  |  |  |  |  |
| Natural Rubber | 75 | 100 | 100 | 75 | 75 | 75 | 100 | 70 |
| Butadiene Rubber 1 |  |  |  | 25 |  |  |  |  |
| Butadiene Rubber 2 |  |  |  |  | 25 |  |  |  |
| Butadiene Rubber 3 | 25 |  |  |  |  | 25 |  | 30 |
| Carbon Black 1 | 25 | 12 | 10 | 14 | 20 |  | 25 | 20 |
| Carbon Black 2 |  | 25 | 15 | 17 |  | 20 |  | 20 |
| Carbon Black 3 |  |  |  |  |  | 20 |  |  |
| Carbon Black 4 | 20 |  |  |  | 10 |  | 10 |  |
| Silica | 3 | 3 | 15 | 20 | 20 |  |  | 20 |
| Silane Coupling Agent |  |  | 1.5 | 2 | 2 |  |  | 2 |
| Wax | 2 | 2 | 2 | 2 | 2 | 2 | 2 | 2 |
| Antioxidant 1 | 1 | 1 | 1 | 1 | 1 | 1 | 1 | 1 |
| Antioxidant 2 | 0.4 | 0.4 | 0.4 | 0.4 | 0.4 | 0.4 | 0.4 | 0.4 |
| Zinc Oxide | 2 | 2 | 2 | 2 | 2 | 2 | 2 | 2 |
| Stearic Acid | 2 | 2 | 2 | 2 | 2 | 2 | 2 | 2 |
| Sulfur | 21 | 2.1 | 2.1 | 2.1 | 2.1 | 2.1 | 2.1 | 2.1 |
| Vulcanization Accelerator | 1.5 | 2.1 | 2.1 | 1.5 | 1.5 | 2.1 | 2.1 | 1.5 |
| Evaluation |  |  |  |  |  |  |  |  |
| Tan$\delta$@60°C | 0.042 | 0.035 | 0.029 | 0.039 | 0.036 | 0.044 | 0.031 | 0.043 |
| Low Heat Generation Properties (index) | 86 | 71 | 59 | 80 | 73 | 90 | 63 | 88 |
| Hardness | A63 | A58 | A56 | A64 | A63 | A60 | A55 | A65 |
| M300 [MPa] | 18 | 14 | 14 | 17 | 15 | 16 | 12 | 19 |
| Tear Strength [N/mm] | 43 | 42 | 44 | 51 | 56 | 45 | 32 | 66 |
| Average Peel Strength [N/mm] | 415 | 345 | 383 | 364 | 404 | 332 | 354 | 401 |
| Tread Separation Resistance | P | P | P | P | P | P | P | P |

[Table 2]

|  | Comp. Ex 1 | Comp. Ex. 2 | Comp. Ex. 3 | Comp. Ex. 4 | Comp. Ex. 5 | Comp. Ex. 6 |
|---|---|---|---|---|---|---|
| Formulation (parts by mass) |  |  |  |  |  |  |
| Natural Rubber | 80 | 80 | 70 | 100 | 30 | 75 |

(continued)

| | Comp. Ex 1 | Comp. Ex. 2 | Comp. Ex. 3 | Comp. Ex. 4 | Comp. Ex. 5 | Comp. Ex. 6 |
|---|---|---|---|---|---|---|
| Formulation (parts by mass) | | | | | | |
| Butadiene Rubber 1 | | 20 | | | | |
| Butadiene Rubber 2 | 20 | | 30 | | 70 | |
| Butadiene Rubber 3 | | | | | | 25 |
| Carbon Black 1 | | 15 | | 25 | | 25 |
| Carbon Black 2 | 30 | | 65 | | 50 | 15 |
| Carbon Black 3 | | | | | | |
| Carbon Black 4 | | 15 | | 20 | | |
| Silica | | 3 | | | | |
| Silane Coupling Agent | | | | | | |
| Wax | 2 | 2 | 2 | 2 | 2 | 2 |
| Antioxidant 1 | 1 | 1 | 1 | 1 | 1 | 1 |
| Antioxidant 2 | 0.4 | 0.4 | 0.4 | 0.4 | 0.4 | 0.4 |
| Zinc Oxide | 2 | 2 | 2 | 2 | 2 | 2 |
| Stearic Acid | 2 | 2 | 2 | 2 | 2 | 2 |
| Sulfur | 2.1 | 2.1 | 2.1 | 2.1 | 2.1 | 2.1 |
| Vulcanization Accelerator | 1.5 | 1.5 | 1.5 | 1.5 | 1.5 | 2.1 |
| Evaluation | | | | | | |
| Tan$\delta$@60°C | 0.049 | 0.031 | 0.141 | 0.110 | 0.052 | 0.027 |
| Low Heat Generation Properties (index) | 100 | 63 | 287 | 224 | 106 | 55 |
| Hardness | A55 | A52 | A66 | A61 | A65 | A58 |
| M300 [MPa] | 10 | 9 | 15 | 16 | 12 | 15 |
| Tear Strength [N/mm] | 41 | 46 | 43 | 47 | 25 | 16 |
| Average Peel Strength [N/mm] | 369 | 229 | 396 | 383 | 290 | 156 |
| Tread Separation Resistance | P | F | P | P | F | F |

[Preparation of Rubber Composition A]

Using a Banbury mixer, following the formulation shown in Table 3 below, first, in the first mixing stage, ingredients excluding sulfur and a vulcanization accelerator were added to a rubber component and kneaded (discharge temperature = 155°C). Next, in the final mixing stage, sulfur and a vulcanization accelerator were added to the obtained kneaded product and kneaded (discharge temperature = 90°C), thereby preparing a rubber composition A for a cap tread.

[Table 3]

| | Manufacturer | Product Name | Incorporation Amount (parts by mass) |
|---|---|---|---|
| Natural Rubber | | RSS#3 | 70 |
| Styrene Butadiene Rubber | ENEOS Materials Corporation | SBR1502 | 30 |
| Carbon Black | Tokai Carbon Co., Ltd. | SEAST KH | 20 |
| Silica | Tosoh Silica Corporation | Nipsil AQ | 30 |

(continued)

|  | Manufacturer | Product Name | Incorporation Amount (parts by mass) |
|---|---|---|---|
| Silane Coupling Agent | Evonik Japan | Si75 | 2.4 |
| Wax | Nippon Seiro Co., Ltd. | OZOACE 1722 | 2 |
| Antioxidant 1 | Ouchi Shinko Chemical Industrial Co., Ltd. | NOCRAC 6C | 2 |
| Antioxidant 2 | Kemai Chemical | ANTIOXIDANT TMQ | 0.7 |
| Zinc Oxide | Mitsui Mining & Smelting Co., Ltd. | Zinc Oxide, Type 3 | 2 |
| Stearic Acid | Kao Corporation | LUNAC S20 | 2 |
| Sulfur | Tsurumi Chemical Industry Co., Ltd. | 5% Oil-Treated Powdered Sulfur | 1.8 |
| Vulcanization Accelerator | Sanshin Chemical Industry Co., Ltd. | Sanceler NS-G | 2.1 |

[Measurement/Evaluation]

(Tan $\delta$@60°C, Low Heat Generation Properties, Hardness, M300, Tear Strength)

Each obtained rubber composition B was vulcanized at 150°C for 30 minutes to make a vulcanized rubber sample of a predetermined shape. Using the obtained rubber samples, the loss factor (tan $\delta$@60°C), low heat generation properties, hardness, M300 (300% modulus), and tear strength were measured and evaluated. The measurement and evaluation methods are as follows. The results are as shown in Tables 1 and 2.

- Tan $\delta$@60°C: Measured in accordance with JIS K6394:2007. Specifically, using a viscoelasticity measuring apparatus manufactured by GABO, the loss factor tan $\delta$ of a rubber sample 5 mm wide × 40 mm long × 2 mm thick was measured under conditions of a temperature of 60°C, a static strain of 10%, a dynamic strain of 1%, and a frequency of 10 Hz (tensile mode).

- Low Heat Generation Properties: The tan $\delta$@60°C measured above was expressed as an index taking the value of Comparative Example 1 as 100. The smaller the index, the lower the tan $\delta$, that is, the less likely heat is to be generated, indicating better low heat generation properties.

- Hardness: A rubber sample having a thickness of 12.5 mm was measured for hardness at 23°C in accordance with JIS K6253-3:2012, Durometer Type A Method.
- M300: In accordance with JIS K6251:2017, using a tensile tester manufactured by Shimadzu Corporation, a dumbbell-shaped No. 3 rubber sample having a thickness of 2 mm was subjected to the test at a tensile speed of 500 mm/min (measurement temperature: 23°C) to determine the tensile stress at 300% elongation.
- Tear Strength: Measured in accordance with JIS K6252-1:2015. Specifically, using a tensile tester manufactured by Shimadzu Corporation, a rubber sample (2 mm thick) punched in a crescent shape and having a 0.50±0.08-mm cut made at the center of the indentation was subjected to the test at a tensile speed of 500 mm/min (measurement temperature: 23°C). The maximum tear force until the rubber sample reached fracture was read and divided by the thickness of the rubber sample to determine the tear strength.

The rubber composition A prepared according to the formulation shown in Table 3 above was vulcanized at 150°C for 30 minutes, and M300 of the resulting rubber sample was measured by the same measurement method as for the rubber composition B described above. As a result, M300 of the rubber composition A was 9.2 MPa.

(Average Peel Strength)

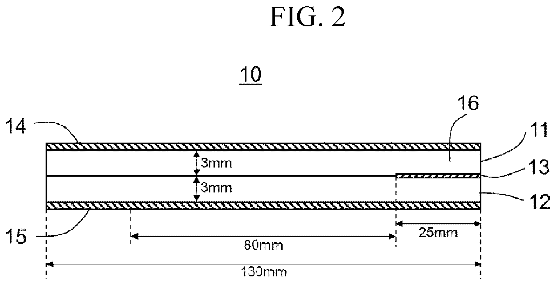

A test piece obtained by attaching the rubber composition B to the rubber composition A was measured for average peel strength. The measurement method is as follows. The results are as shown in Tables 1 and 2.
An unvulcanized rubber sheet of the rubber composition A and an unvulcanized rubber sheet of the rubber composition B were stacked together, a PET film was partially inserted between them, and reinforcing layers were placed on the front and back unvulcanized rubber sheet surfaces, respectively, followed by vulcanization at 150°C for 30 minutes, thereby making a test piece 10 having the cross-sectional shape shown in FIG. 2. As shown in FIG. 2, the test piece 10 includes a rubber sheet 11 made of the rubber composition A measuring 130 mm long × 3 mm thick and a rubber sheet 12 made of the rubber composition B measuring 130 mm long × 3 mm thick attached together. The test piece 10 has a PET film 13 inserted into a portion up to 25 mm from one end in the longitudinal direction, providing a grip part 16 (non-adhesive portion) for use in a peel test. Reinforcing layers 14 and 15 are vulcanization-bonded to the front and back surfaces of the test piece 10, respectively.

The reinforcing layers 14 and 15 are sheets for reinforcement to allow the rubber sheets 11 and 12 to be separated without fracture in a peel test. As the reinforcing layers 14 and 15, topping sheets containing organic fiber cords generally used for carcass plies were used. The topping sheet is formed of organic fiber cords aligned parallel to the longitudinal direction of the test piece 10 and covered with rubber. Here, polyester fiber cords were used as the organic fiber cords.

After vulcanization, the test piece 10 was formed into a 10-mm-wide strip. The obtained strip-shaped test piece 10 was held at the grip part by "Autograph DCS500" manufactured by Shimadzu Corporation, and the test piece 10 was pulled up and down into a T-shape at a peeling speed of 50 mm/min and separated by 80 mm or more in the longitudinal direction of the test piece 10.

The average peel strength was calculated as follows. All peak values of peel strength from the start of peeling to a peeling length of 80 mm were detected. At this time, the detection sensitivity was set to 1/100 of the full scale. Incidentally, the peel strength is defined by the following formula.

$$\text{Peel strength (N/mm)} = \text{peel force (N)/test piece width (mm)}$$

Of all the detected peak values, peak values from the start of peeling to a length equivalent to 5% of the peeling length (i.e., 4 mm) were excluded. Therefore, the length from the point where peeling of 4 mm occurred to the point where peeling of 80 mm occurred was defined as the overall peeling length. The overall peeling length was equally divided into five sections, and the average of all peak values of peel strength in each section was calculated. From the averages of the peak values calculated for the respective sections, their average was calculated. The obtained value is the average of all peak values over the overall peeling length, and was defined as the average peel strength (N/mm).

(Tire Evaluation: Tread Separation Resistance)

Using the rubber composition A for a cap tread and the rubber composition B for a base tread, a test tire (off-road tire, tire size: 265/70R18, tire internal pressure: 230 kPa, maximum load: 2,400 kg) was produced in the usual manner. The test tires were mounted on a vehicle, and the vehicle was driven around a 200-meter gravel track at a speed of 50 km/h. After 40 laps, the tread surface was checked to check the presence of cracks from the groove bottom to the blocks. In the case were cracks of 5 mm or more were absent, a rating of "P (pass)" was given, while in the case where cracks of 5 mm or more were present, a rating of "F (fail)" was given. The results are shown in Tables 1 and 2.

As shown in Table 2, in Comparative Example 1 (standard example), although the tread separation resistance was present, the loss factor tan δ of the rubber composition B was high, and the low heat generation properties were poor. In Comparative Example 2, compared to Comparative Example 1, the loss factor tan δ of the rubber composition B was reduced, leading to reduced heat generation of the base tread. However, in Comparative Example 2, the 300% modulus and the average peel strength were low, and the tread separation resistance was poor. In Comparative Example 3, the total filler amount in the rubber composition B was increased to provide the base tread with high hardness suitable for off-road use. In Comparative Example 3, although the average peel strength was high, and the tread separation resistance was excellent, the loss factor tan δ of the rubber composition B was high, and the low heat generation properties were poor.

In Comparative Example 4, the total filler amount in the rubber composition B was within the specified range, the average peel strength was high, and the tread separation resistance was excellent. However, in Comparative Example 4, the loss factor tan δ was high, and the low heat generation properties were poor. In Comparative Example 5, the total filler amount in the rubber composition B was within the specified range, but the proportion of natural rubber was low. Therefore, in Comparative Example 5, the tear strength and the average peel strength were low, and the tread separation resistance was poor. In addition, compared to Comparative Example 1, the loss factor tan δ was high, and the low heat generation properties were poor. In Comparative Example 6, although the loss factor tan δ of the rubber composition B was low, and the low heat generation properties were excellent, the tear strength and the average peel strength were low, and the tread separation resistance was poor.

In contrast, in Examples 1 to 8, the loss factor tan δ of the rubber composition B was 0.045 or less, and the low heat generation properties were excellent. In addition, the 300% modulus and tear strength of the rubber composition B were high, and the strength was excellent. Further, the average peel strength between the rubber composition A and the rubber composition B was 300 N/mm or more, and the tread separation resistance was excellent. Therefore, in Examples 1 to 8, it was possible to improve low heat generation properties while maintaining tread separation resistance.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

Reference Signs List

1: Pneumatic tire
4: Tread
7: Tread rubber
71: Cap tread
72: Base tread

**Claims**

1. A tire (1) comprising a tread rubber (7) including a cap tread (71) and a base tread (72) that is disposed inward of the cap tread (71) in a tire radial direction, wherein

   the base tread (72) is formed from a rubber composition including a rubber component that contains 70 mass% or more of natural rubber and 35 to 60 parts by mass of a filler per 100 parts by mass of the rubber component, and having a loss factor tan $\delta$ of 0.045 or less as measured under conditions of a temperature of 60°C, a static strain of 10%, a dynamic strain of 1%, and a frequency of 10 Hz, and
   an average peel strength when a rubber composition forming the cap tread (71) and the rubber composition forming the base tread (72) attached together are separated at a speed of 50 mm/min is 300 N/mm or more.

2. The tire according to claim 1, wherein the rubber composition forming the base tread (72) has a 300% modulus of 12 to 20 MPa as measured in accordance with JIS K6251:2017.

3. The tire according to claim 1 or 2, wherein the rubber composition forming the base tread (72) has a crescent tear strength of 32 N/mm or more as measured in accordance with JIS K6252-1:2015.

4. The tire according to any one of claims 1 to 3, wherein the filler in the rubber composition forming the base tread (72) contains carbon black having a nitrogen adsorption specific surface area of 60 $m^2$/g or less.

5. The tire according to any one of claims 1 to 4, wherein the filler in the rubber composition forming the base tread (72) contains two or more kinds of carbon black.

6. The tire according to any one of claims 1 to 5, wherein the filler in the rubber composition forming the base tread (72) contains silica.

7. The tire according to any one of claims 1 to 6, being an off-road tire.

# FIG. 1

# FIG. 2

Europäisches
Patentamt

European
Patent Office

Office européen
des brevets

# EUROPEAN SEARCH REPORT

**Application Number**

EP 25 17 0998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 542 241 A (TRIANGLE GROUP CO LTD) 4 May 2016 (2016-05-04) | 1-4,6,7 | INV. B60C1/00 C08L7/00 |
| Y | * example 3; tables 1, 2, 4 * | 5 | |
| | ----- | | |
| A | EP 0 855 425 B1 (GOODYEAR TIRE & RUBBER [US]) 2 April 2003 (2003-04-02) * examples B, C * * paragraph [0026] * | 1-7 | |
| | ----- | | |
| Y | US 11 267 954 B2 (YOKOHAMA RUBBER CO LTD [JP]) 8 March 2022 (2022-03-08) | 5 | |
| A | * examples 1-8; table 1 * | 1-4,6,7 | |
| | ----- | | |
| A | EP 0 476 310 B1 (GOODYEAR TIRE & RUBBER [US]) 18 December 1996 (1996-12-18) * tables I, II * | 1-7 | |
| | ----- | | |

**TECHNICAL FIELDS SEARCHED (IPC)**

B60C
C08L

The present search report has been drawn up for all claims

| Place of search | Date of completion of the search | Examiner |
|---|---|---|
| Munich | 25 September 2025 | Laïb, Samia |

EPO FORM 1503 03.82 (P04C01)

## ANNEX TO THE EUROPEAN SEARCH REPORT
## ON EUROPEAN PATENT APPLICATION NO.

EP 25 17 0998

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2025

| Patent document cited in search report | | Publication date | Patent family member(s) | | Publication date |
|---|---|---|---|---|---|
| CN 105542241 | A | 04-05-2016 | NONE | | |
| EP 0855425 | B1 | 02-04-2003 | CA | 2203321 A1 | 23-07-1998 |
| | | | DE | 69812735 T2 | 05-02-2004 |
| | | | EP | 0855425 A1 | 29-07-1998 |
| | | | US | 5736593 A | 07-04-1998 |
| US 11267954 | B2 | 08-03-2022 | EP | 3584279 A1 | 25-12-2019 |
| | | | RU | 2711411 C1 | 17-01-2020 |
| | | | US | 2019359797 A1 | 28-11-2019 |
| | | | WO | 2018151148 A1 | 23-08-2018 |
| EP 0476310 | B1 | 18-12-1996 | AU | 645118 B2 | 06-01-1994 |
| | | | BR | 9103572 A | 12-05-1992 |
| | | | CA | 2035662 A1 | 01-03-1992 |
| | | | DE | 69123671 T2 | 28-05-1997 |
| | | | EP | 0476310 A2 | 25-03-1992 |
| | | | JP | 3115360 B2 | 04-12-2000 |
| | | | JP | H04234445 A | 24-08-1992 |
| | | | KR | 920004487 A | 27-03-1992 |

EPO FORM P0459

For more details about this annex : see Official Journal of the European Patent Office, No. 12/82

**REFERENCES CITED IN THE DESCRIPTION**

**Patent documents cited in the description**

- JP 2018058420 A

- JP 2022148076 A